# DEMANDE DE BREVET EUROPEEN

(11) **EP 4 015 401 A1**
(43) Date de publication de la demande: **22.06.2022**
(21) Numéro de dépôt: 21216459.4
(22) Date de dépôt: 21.12.2021
(51) Int. Cl.: B65B 7/16, B65B 25/04, B65B 51/02, B65D 5/24

(54) **CHAINE D'EMBALLAGE ET PROCÉDÉ D'EMBALLAGE ÉCOLOGIQUE**

(30) Priorité: 21.12.2020 FR 2013774
(71) Demandeur: Sorting, 82290 Lacourt-Saint-Pierre (FR)
(72) Inventeur: DELCASSE, Jean-Luc, 82290 LACOURT-SAINT-PIERRE (FR); AUZERIC, Laurent, 31770 COLOMIERS (FR)
(74) Mandataire: Plasseraud IP

(57) **Abrégé**

Chaine d'emballage (1) et procédé d'emballage associé, la chaine d'emballage comprenant :
- un convoyeur (11) convoyant de manière continue, une pluralité de barquettes en matériau biodégradable,
- un distributeur de film transparent biodégradable (12), configuré pour accueillir une bobine de film transparent biodégradable (12a) et pour dérouler de manière continue ladite bobine,
- un dispositif d'encollage (13a) configuré pour encoller une partie du film transparent (F) et/ou une partie de chaque barquette (B),
- un rouleau presseur (14) configuré pour placer le film transparent de manière à recouvrir l'ouverture de chaque barquette,
- au moins un dispositif de pressage configuré pour presser le film transparent sur chaque barquette au niveau de la partie encollée,
- un dispositif de découpe (15) configuré pour couper le film transparent selon une direction sensiblement perpendiculaire à la direction de convoyage (C).

## Description

### Domaine technique

La présente divulgation relève du domaine des emballages destinés à contenir des fruits et légumes et autres denrées périssables. Ces emballages présentent la particularité d'être configurés pour permettre la visualisation des denrées périssables tout en les empêchant de sortir de l'emballage.

### Technique antérieure

Il est connu d'emballer des denrées périssables dans des barquettes en plastique, les barquettes étant prévues pour être fermées par un couvercle en plastique ou être entourées par des films plastiques ou des filets en matière synthétiques. Ces emballages présentent l'avantage d'être peu coûteux mais sont peu écologiques car le plastique utilisé n'est pas toujours recyclable et lorsqu'il l'est, il nécessite de grandes dépenses d'énergie pour pouvoir le réutiliser.

Afin de réduire l'impact environnemental, différentes solutions ont été proposées. Une solution consiste à remplacer ces barquettes en plastique, non-recyclables, par des barquettes recyclables ou biodégradables parfois compostables. Différentes techniques sont alors utilisées pour empêcher les denrées périssables de sortir de leur emballage tout en étant visibles pour le consommateur.

Il peut s'agir d'envelopper la barquette avec ses denrées avec un film thermo-soudé (« flowpack packaging » en anglais) autour de la barquette, de thermo-souder un film plastique sur une collerette supérieure de la barquette formée par un rebord plat ou arrondi par une technique dite d'operculage. Il est aussi connu, dans le domaine du conditionnement de fruits et légumes sur des plateaux, de fixer un film transparent prédécoupé sur les bords d'un plateau par agrafage ou collage. Dans ce cas, une colle thermique, apposée chaude et durcissant très rapidement en se refroidissant, assure la fonction de collage voulue. Cette colle thermique permet de fixer le film transparent avec suffisamment de rigidité sur le plateau.

Ces techniques sont couramment mises en œuvre avec des films plastiques transparents « standards », c'est-à-dire non-recyclables et peu coûteux. L'utilisation de tels films n'est cependant pas optimale en termes d'impact écologique car extrêmement polluant et est donc vouée à disparaitre au profit de solutions moins polluantes ou idéalement non polluantes.

Afin de réduire l'impact écologique, des films plastique recyclables ont été utilisés. En outre, des films transparents biodégradables ont également été développés. Des films transparents compostables à domicile, aussi connus sous la dénomination « Home Compost OK », et des films transparents compostables après traitement dans une usine adaptée, connus aussi sous la dénomination « Compost OK », ont notamment été développés. Ces films présentent l'avantage, en plus d'être biodégradables, d'être également compostables et donc de présenter peu d'impact sur l'environnement.

Pour qu'un matériau soit considéré comme biodégradable et/ou compostable, il doit répondre à différentes exigences notamment en termes de composition, désintégration et biodégradabilité, codifiées au sein de différentes normes pouvant différer selon les pays. Par exemple, en France, il s'agit des normes EN 13432, EN 14045, ISO 16929, NF T 51-800 et ISO 14855 notamment. La différence entre matériaux biodégradable et matériaux compostables est également décrite sur la page web suivante : https://www.citeo.com/le-mag/466.

On cherche donc à intégrer de tels films transparents dans les emballages et plus particulièrement pour l'emballage des denrées périssables afin de créer des emballages plus écologiques. Cela est envisagé notamment par une nouvelle directive européenne prévue pour entrer en vigueur en partie le 1^{er} janvier 2022 et le 1^{er} janvier 2025 notamment dite loi Anti Gaspillage pour une Economie Circulaire (AGEC ).

Suite au développement récent des films transparents biodégradables ou compostables, on cherche à adapter les techniques précédemment évoquées à l'utilisation de films transparents biodégradables et/ou compostables. Les techniques précédemment évoquées présentent cependant différents inconvénients.

En ce qui concerne l'enveloppage dans un film thermo-soudé, les quantités de film transparent nécessaires rendent cette solution particulièrement couteuse.

Par ailleurs, l'operculage de films biodégradables ou compostables sur des barquettes en carton ou autre matériau recyclable, biodégradable et/ou compostable est en cours d'optimisation afin d'obtenir une bonne tenue du film transparent thermo-soudé sur la barquette. En outre, la technique d'operculage génère une chute de matière créant un déchet industriel car le film utilisé est découpé par procédé thermique afin de ne garder sur la barquette uniquement la dimension nécessaire à fermer la barquette, créant un trou dans le film plastique, cette chute perforée est remise en rouleau créant ainsi un déchet supplémentaire à valoriser ou à détruire.

Concernant le collage à l'aide d'une colle thermique, il s'agit d'une colle à base de plastique non-recyclable et non biodégradable ce qui engendre des résidus lors de la biodégradation ou du compostage. L'utilisation de telles colles est vouée à terme à disparaître afin de pouvoir produire des emballages zéro déchet complètement biodégradables ou recyclables.

Il y a aussi une demande croissante des consommateurs soucieux de l'environnement d'avoir accès à des emballages plus écologiques.

### Résumé

La présente invention vise à remédier au moins à certains des inconvénients précités.

En outre, un but de la présente invention est de proposer un procédé d'emballage écologique permettant de limiter au maximum la production de déchets et les coûts associés à l'utilisation des films transparents recyclables, biodégradables ou compostables.

Un autre but de la présente invention est de proposer des alternatives aux procédés d'enveloppement dans du film thermo-soudé (« flowpack packaging »), d'operculage et de collage d'un film prédécoupé avec une colle thermique.

Selon un premier aspect, il est proposé un procédé d'emballage écologique Procédé d'emballage écologique de denrées périssables dans une barquette biodégradable ou recyclable permettant la visualisation des denrées à travers une ouverture de la barquette, comportant:
- une étape de fourniture d'une pluralité de barquettes en matériau biodégradable ou recyclable, chaque barquette formant une cavité destinée à contenir des denrées périssables, et comprenant une ouverture,
- une étape de convoyage de manière continue de la pluralité de barquettes dans une direction de convoyage, la pluralité de barquettes étant placées consécutivement de manière à présenter une paire de parois latérales orientées de manière substantiellement parallèles à la direction de convoyage,
- une étape de fermeture de l'ouverture de chaque barquette par un film transparent biodégradable ou recyclable, l'étape de fermeture comprenant une pluralité de sous-étapes mises en œuvre lors du convoyage de manière continue, la pluralité de sous-étapes comportant :
   * le déroulement, de manière continue, selon une direction de déroulement, d'une bobine comportant le film transparent,
   * l'encollage d'au moins une partie du film transparent déroulé,
   * le placement du film transparent de manière à recouvrir l'ouverture,
   * le pressage du film transparent sur la barquette au niveau de la partie encollée,
   * la découpe du film transparent selon une direction sensiblement perpendiculaire à la direction de convoyage de manière à séparer deux barquettes consécutives dont l'ouverture de chacune est recouverte du film transparent collé sur la barquette.

Les caractéristiques exposées dans les paragraphes suivants peuvent, optionnellement, être mises en œuvre, indépendamment les unes des autres ou en combinaison les unes avec les autres :

Dans un mode de réalisation, la barquette comporte au moins deux pans de parois situés de part et d'autre de l'ouverture et destinés à s'étendre dans un plan parallèle à une paroi de fond de la barquette, et la partie encollée comprend deux bandes du film transparent destinées à venir en contact contre les deux pans de paroi de la barquette.

Dans un mode de réalisation, la partie encollée comprend des bandes du film transparent destinées à venir en contact contre lesdites bandes d'extrémité supérieure, et - la sous-étape de pressage du film transparent sur la barquette au niveau de la partie encollée comprend le rabattage de deux bords du film transparent sur les parois latérales de la barquette orientées de manière substantiellement parallèles à la direction de convoyage.

Dans un mode de réalisation, la sous-étape de découpe du film transparent comprend, lorsque la distance entre deux barquettes consécutives est supérieure à une distance prédéterminée, :
- la coupe du film transparent sur une ligne de découpe selon une direction perpendiculaire à la direction de convoyage, laissant ainsi deux extrémités de film transparent libres de part et d'autre de la ligne de découpe, et
- le rabattage de chaque extrémité libre vers une paroi latérale d'une barquette adjacente respective orientée perpendiculairement à la direction de convoyage.

Dans un mode de réalisation, chaque barquette comprend deux parois latérales orientées perpendiculairement à la direction de convoyage, et la partie encollée comprend des bandes du film transparent destinées à venir en contact contre des bandes d'extrémité supérieure des parois latérales orientées perpendiculairement à la direction de convoyage.

Selon un second aspect, il est proposé une chaine d'emballage configurée pour mettre en œuvre le procédé d'emballage selon la description qui précède, comprenant :
- un convoyeur configuré pour convoyer, de manière continue, une pluralité de barquettes en matériau biodégradable ou recyclable dans une direction de convoyage,
- un distributeur de film transparent biodégradable ou recyclable, configuré pour accueillir une bobine de film transparent biodégradable et pour dérouler de manière continue ladite bobine selon une direction de déroulement,
- un dispositif d'encollage configuré pour encoller une partie du film transparent déroulé de la bobine,

- un rouleau presseur configuré pour placer le film transparent de manière à recouvrir l'ouverture de chaque barquette,
- au moins un dispositif de pressage configuré pour presser le film transparent sur chaque barquette au niveau de la partie encollée,
- un dispositif de découpe configuré pour couper le film transparent selon une direction sensiblement perpendiculaire à la direction de convoyage de manière à séparer deux barquettes consécutives dont l'ouverture de chacune est recouverte de film transparent collé sur la barquette.

Les caractéristiques exposées dans les paragraphes suivants peuvent, optionnellement, être mises en œuvre, indépendamment les unes des autres ou en combinaison les unes avec les autres :

Dans un mode de réalisation, la barquette comporte au moins deux pans de parois situés de part et d'autre de l'ouverture et destinés à s'étendre perpendiculairement aux parois latérales, et le dispositif d'encollage est configuré pour encoller deux bandes du film transparent destinées à venir en contact contre les deux pans de paroi de la barquette.

Dans un mode de réalisation, le dispositif d'encollage est configuré pour encoller des bandes du film transparent destinées à venir en contact contre des bandes d'extrémité supérieure des parois latérales substantiellement parallèles à la direction de convoyage de chaque barquette, et la chaine d'emballage comprend un dispositif de pressage configuré pour rabattre deux bords du film transparent sur les parois latérales de la barquette orientée de manière substantiellement parallèle à la direction de convoyage.

Dans un mode de réalisation, lorsque la distance entre deux barquettes consécutives est supérieure à une distance prédéterminée :
- le dispositif de découpe est configuré pour couper le film transparent sur une ligne de découpe selon une direction perpendiculaire à la direction de convoyage, laissant ainsi deux extrémités de film transparent libres de part et d'autre de la ligne de découpe, et
- la chaine d'emballage comprend en outre un dispositif de rabattage configuré pour rabattre chaque extrémité libre vers une paroi latérale d'une barquette adjacente respective orientée perpendiculairement à la direction de convoyage.

Dans un mode de réalisation, chaque barquette comprend deux parois latérales orientées perpendiculairement à la direction de convoyage, et le dispositif d'encollage est configuré pour encoller des bandes du film transparent destinées à venir en contact contre des bandes d'extrémité supérieure des parois latérales orientées perpendiculairement à la direction de convoyage.

Dans un mode de réalisation, le dispositif d'encollage est configuré pour encoller des bandes de film transparent destinées à être mises en contact contre des parties prédéterminées de la barquette.

Selon un troisième aspect, il est proposé une barquette en matériau dégradable biodégradable ou recyclable adaptée pour la mise en œuvre du procédé d'emballage écologique décrit ci-dessus, ladite barquette formant une cavité destinée à contenir des denrées périssables, ladite barquette comportant une paroi de fond et deux paires de parois latérales parallèles, les paires de parois latérales étant perpendiculaires l'une à l'autre, ladite barquette comprenant en outre deux pans de parois dans le prolongement d'une paire de parois latérales, les deux pans de parois étant de part et d'autre d'une ouverture de la barquette, lesdits pans de parois étant configurés pour résister à une pression prédéterminée exercée par un rouleau presseur, la pression prédéterminée étant adaptée pour presser un film transparent biodégradable contre les pans de parois au niveau d'une partie encollée des pans de parois ou du film transparent destiné à venir en contact avec lesdits pans de manière à coller le film transparent biodégradable sur les pans de parois.

La solution proposée permet d'utiliser un minimum de film transparent qu'il soit recyclable, biodégradable ou compostable, ce qui permet de faire baisser les coûts de matière première et de limiter les déchets supplémentaires à valoriser. En effet, tout le film transparent déroulé est utilisé dans la production de l'emballage. Le film transparent est découpé directement à la bonne longueur. De plus, la bobine de film transparent est choisie de manière à avoir une largeur correspondant à la largeur de film collé sur la barquette. Par ailleurs, lorsque la bobine de film transparent est plus large que la barquette dans une direction transversale, le film plastique peut être replié sur les côtés de manière à être collé sur l'une des parois latérales de la barquette. On évite ainsi de devoir découper le film transparent dans sa largeur et on augmente le maintien du film transparent qui sera plus difficile à décoller.

Par ailleurs, le procédé et la chaine d'emballage fonctionnent en continu, c'est-à-dire qu'il n'est pas nécessaire de stopper le convoyeur pour réaliser le collage du film transparent sur la barquette. On gagne ainsi également en temps de production de l'emballage.

On notera que, selon la présente demande, lorsque l'on fait référence à un matériau biodégradable, on considère que celui-ci est au moins biodégradable. Le matériau peut donc également être compostable industriellement ou domestiquement étant entendu qu'un matériau compostable est biodégradable.

### Brève description des dessins

D'autres caractéristiques, détails et avantages apparaîtront à la lecture de la description détaillée ci-après, et à l'analyse des dessins annexés, sur lesquels :
**Fig. 1A, Fig. 1B, Fig. 1C, Fig. 1D, Fig. 1E, Fig. 1F**

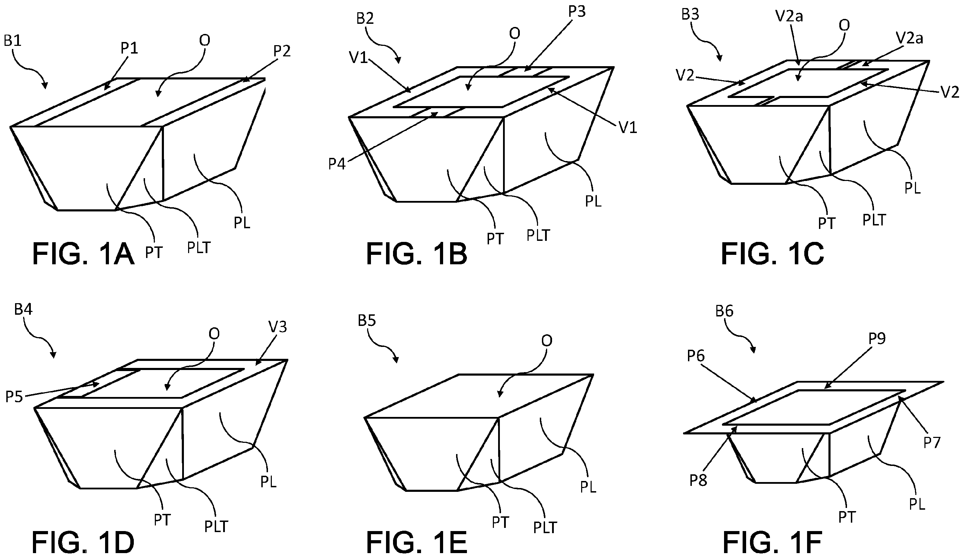

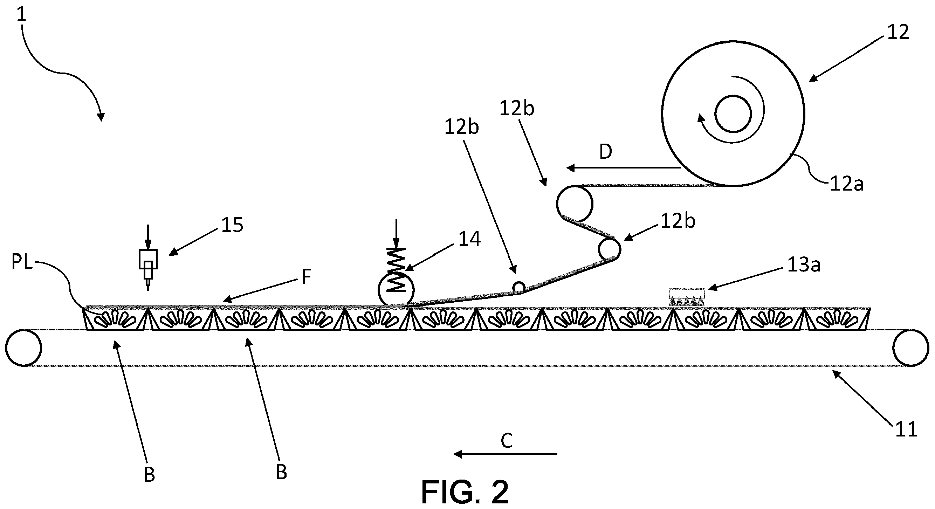

   [Fig. 1A], [Fig. 1B], [Fig. 1C], [Fig. 1D], [Fig. 1E], [Fig. 1F] illustrent plusieurs exemples de barquettes biodégradables destinées à être emballées par l'un ou plusieurs des procédés d'emballage décrits en référence aux figures 2, 4 et 6.
**Fig. 2**
   [Fig. 2] illustre une chaine d'emballage selon un premier mode de réalisation.
**Fig. 3A, Fig. 3B, Fig. 3C, Fig. 3D, Fig. 3E, Fig. 3F**

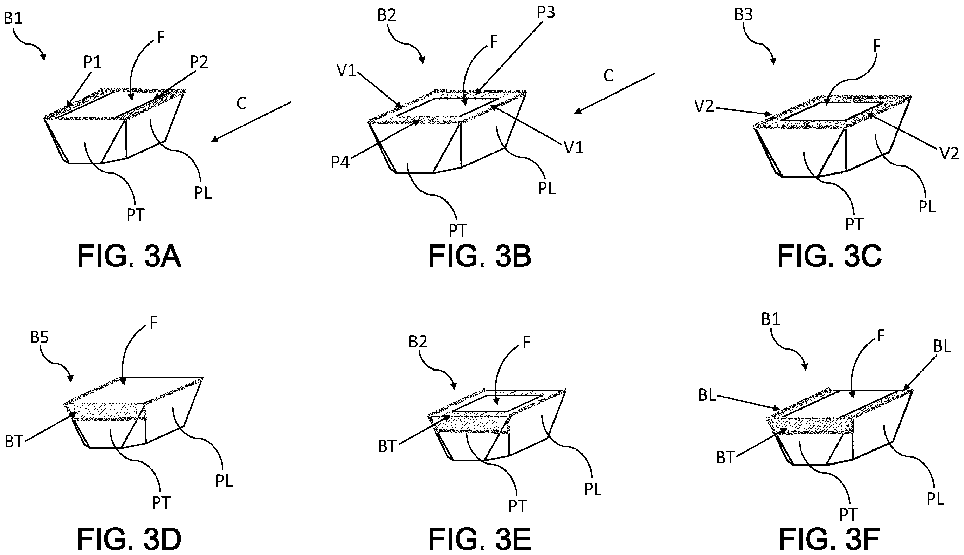

   [Fig. 3A], [Fig. 3B], [Fig. 3C], [Fig. 3D], [Fig. 3E], [Fig. 3F] illustrent à titre d'exemple différents emballages pouvant être obtenus selon l'un des procédés d'emballage décrits en référence aux figures 2, 4 et 6.
**Fig. 4**

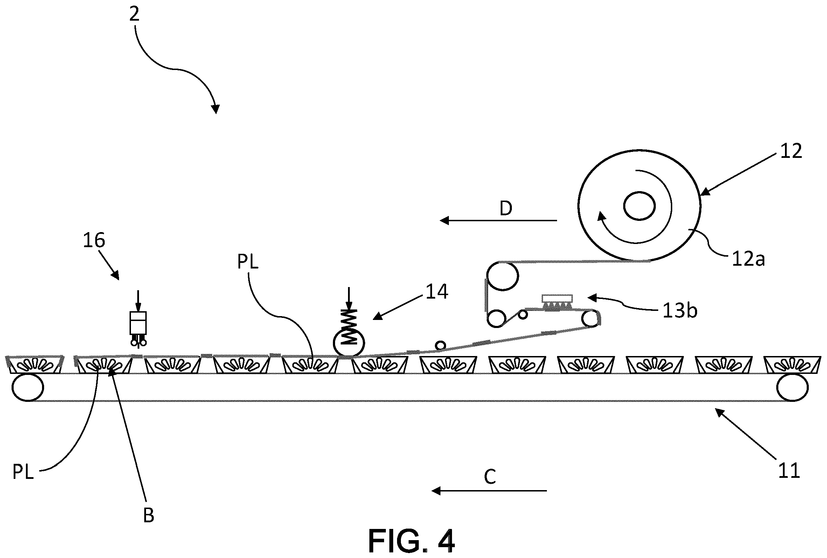

   [Fig. 4] illustre une chaine d'emballage selon un second mode de réalisation.
**Fig. 5**

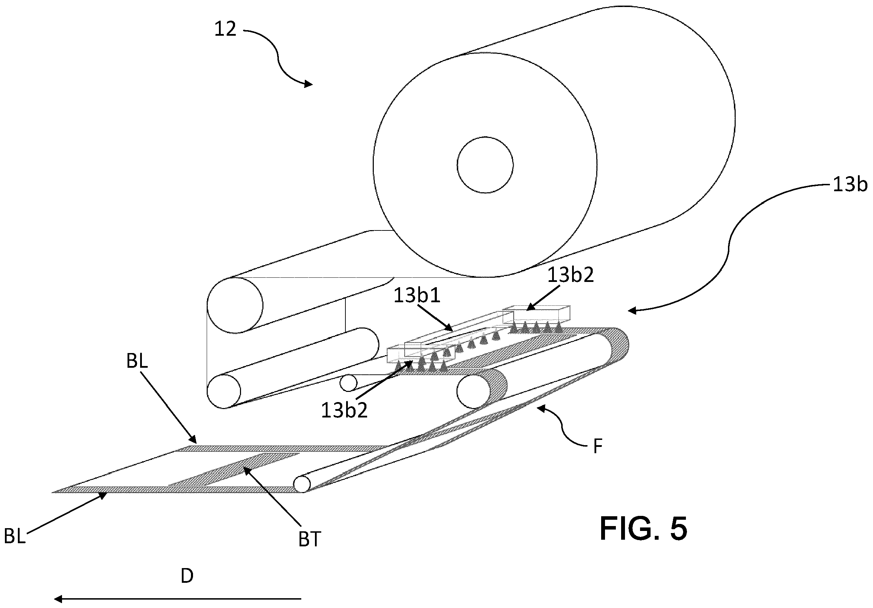

   [Fig. 5] illustre un dispositif d'encollage du film transparent selon un mode de réalisation.
**Fig. 6**

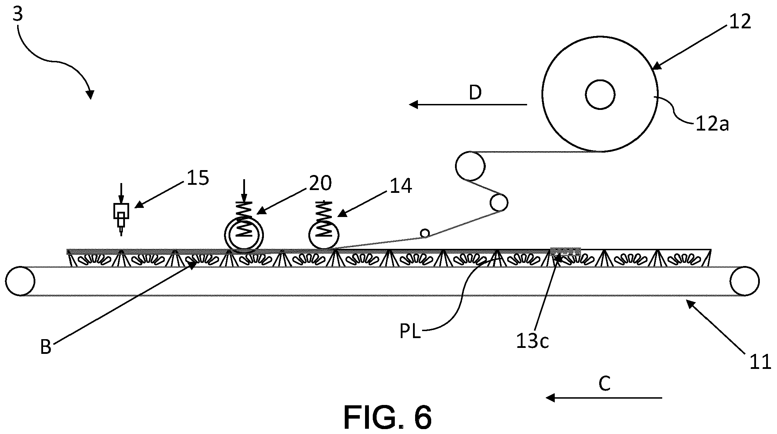

   [Fig. 6] illustre une chaine d'emballage selon un troisième mode de réalisation.
**Fig. 7A, Fig. 7B, Fig. 7C, Fig. 7D**

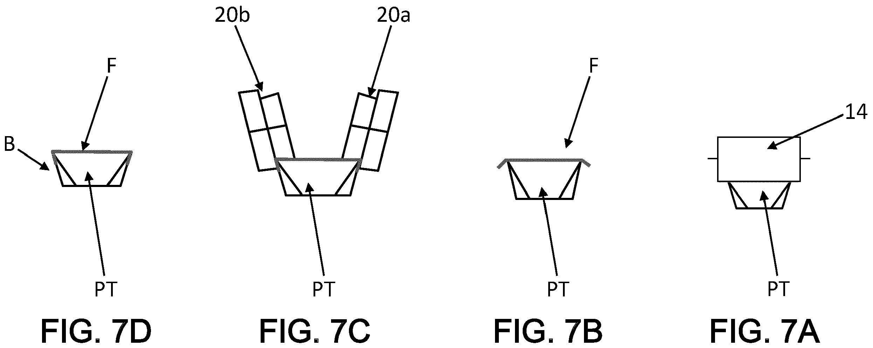

   [Fig. 7A], [Fig. 7B], [Fig. 7C], [Fig. 7D] illustrent en vue de côté une même barquette à différents endroits sur la chaine d'emballage de la figure 6.

### Description des modes de réalisation

La présente demande concerne un procédé et une chaine d'emballage permettant de réaliser un emballage écologique.

Comme discuté précédemment, le procédé et la chaine d'emballage décrits dans les modes de réalisation illustrés par les figures 2, 4 et 6 présentent l'avantage de limiter la quantité de film transparent utilisé et de limiter les déchets générés lors de l'emballage. De plus, l'emballage a également un impact limité sur l'environnement puisqu'il est réalisé à l'aide de matériaux recyclables ou biodégradables, de préférence compostables. Dans les modes de réalisation décrits ici, les barquettes sont des barquettes en carton recyclables et biodégradables.

Les figures 1A, 1B, 1C, 1D, 1E et 1F illustrent différents types de barquettes pouvant être emballées selon l'un ou plusieurs des modes de réalisation décrits ci-après.

Les barquettes B1, B2, B3, B4, B5, B6 des figures 1A, 1B, 1C, 1D, 1E et 1F forment une cavité destinée à contenir des denrées périssables telles que des fruits et légumes par exemple. Les barquettes B1, B2, B3, B4, B5, B6 présentent une paroi de fond et au moins une paire de parois latérales longitudinales PL et transversales PT. Les parois latérales transversales PT sont orientées perpendiculairement aux parois latérales longitudinales PL. Comme illustré ici, les barquettes peuvent comprendre d'autres parois latérales, par exemple des parois latérales reliant les parois latérales longitudinales aux parois latérales transversales, par exemple les parois PLT. Les barquettes B1, B2, B3, B4, B5 comprennent une ouverture O destinée à être recouverte d'un film transparent biodégradable F collé sur la barquette, après que les barquettes soient remplies de denrées, le film transparent biodégradable permettant avantageusement de fermer l'ouverture et de maintenir les denrées dans la cavité formée par la barquette.

L'ouverture de chaque barquette peut être formée de différentes façons.

Dans l'exemple de la figure 1A, la barquette B1 comporte deux pans de parois P1, P2 dans le prolongement d'une paire de parois latérales, ici la paire de parois latérales longitudinales PL. Les pans de parois P1 et P2 s'étendent de part et d'autre de l'ouverture O dans un plan parallèle à la paroi de fond de la barquette. Dans un mode de réalisation, les pans de parois s'étendent depuis le bord supérieur d'une paroi latérale et sont repliés, depuis ce bord, vers la paroi latérale opposée. En d'autres termes les pans de parois s'étendent partiellement au-dessus de la cavité formée par la barquette.

Dans l'exemple des figures 1B, 1C, 1D et 1F, les barquettes B2, B3, B4, B6 comprennent quatre pans de parois situés de part et d'autre de l'ouverture O. Les pans de parois des barquettes B2, B3, B4 peuvent être formés au moins en partie par des volets rabattables V1, V2, V3 s'étendant dans un plan parallèle à la paroi de fond de la barquette lorsqu'ils sont rabattus préalablement à l'emballage des denrées. En outre, les barquettes peuvent également comprendre des pans de parois dans le prolongement des parois transversales tels que les pans de parois P3, P4 sur lesquels reposent en partie les volets V1 de la barquette B2 ou encore le pan de paroi P5 qui est formé en partie par le prolongement d'une des parois latérales PL de la barquette B4. Dans les modes de réalisation représentés dans les figures 1A à 1D, les pans de parois s'étendent dans un plan parallèle à la paroi de fond de la barquette, et s'étendent vers l'intérieur de la barquette à partir des bords supérieurs des parois latérales et/ou transversales de la barquette, c'est-à-dire qu'ils s'étendent au-dessus de la cavité formée par la barquette et restreignent l'ouverture de la barquette.

Dans l'exemple de la figure 1F, les pans de parois P6, P7, P8, P9 sont formés par pliage et collage dans le prolongement des parois latérales transversales PT et longitudinales PL à partir d'un patron de barquette adapté. Ces pans s'étendent également parallèlement à la paroi de fond de la barquette mais en s'étendant vers l'extérieur de la barquette à partir des parois latérales transversales et longitudinales de la barquette.

Les barquettes B1, B2, B3 et B4 sont adaptées pour être recouvertes d'un film transparent collé sur la barquette selon les procédés d'emballage décrits en référence aux figures 2, 4 et 6. La barquette B6 est particulièrement adaptée pour être recouverte d'un film transparent selon le procédé d'emballage décrit en référence à la figure 2 par exemple. La barquette B5 dont les bords de l'ouverture O sont formés par les extrémités des parois latérales longitudinales PL et transversales PT est plutôt adaptée pour être recouverte d'un film transparent collé sur des bandes d'extrémité supérieure des parois latérales selon l'un des procédés d'emballage décrits en référence à la figure 4 ou 6.

Les figures 3A, 3B, 3C, 3D, 3E et 3F illustrent différents types d'emballages pouvant être obtenus par la mise en œuvre de l'un des procédés d'emballage décrits ci-dessous à titre d'exemple.

En référence aux figures 2, 4, et 6, on va décrire des exemples de chaîne d'emballage permettant de mettre en œuvre un procédé d'emballage selon plusieurs modes de réalisation. La chaîne d'emballage comprend dans tous les cas un convoyeur 11, un distributeur de film transparent biodégradable 12, un dispositif d'encollage 13, un rouleau presseur 14 et un dispositif de découpe 15.

Le convoyeur 11 est un convoyeur linéaire configuré pour convoyer de manière continue une pluralité de barquettes B dans une direction de convoyage C. Les barquettes B sont préalablement remplies avec les denrées périssables et placées consécutivement sur le convoyeur de manière à présenter une paire de parois latérales orientées de manière substantiellement parallèle à la direction de convoyage C. Dans l'exemple décrit ici, les parois latérales longitudinales PL sont orientées de manière substantiellement parallèle à la direction de convoyage C. Dans des modes de réalisation, les barquettes peuvent être disposées sur le convoyeur, avec un espace entre deux barquettes consécutives, dans la direction de convoyage. Cet espace peut correspondre à une distance comprise entre quelques millimètres et quelques dizaines de millimètres. Alternativement, les barquettes peuvent être en contact les unes avec les autres, dans la direction de convoyage.

Le distributeur de film transparent 12 est configuré pour accueillir une bobine de film transparent 12a et pour dérouler de manière continue ladite bobine selon une direction de déroulement D. A cet effet, le distributeur de film transparent 12 comprend un dévidoir et une pluralité de rouleaux 12b destinés à guider le film transparent F après déroulement de la bobine 12a en direction du convoyeur 11 dans une direction de déroulement D correspondant à la direction de convoyage C. On notera que le déroulement de la bobine peut être réalisé par application d'une traction sur le film transparent F et que le déroulement de la bobine se fait de manière continue comme explicité ultérieurement.

Le dispositif d'encollage 13 est configuré pour encoller au moins une partie du film transparent déroulé de la bobine 12, ladite partie étant destinée à être pressée contre des pans de la barquette. En particulier, et comme illustré par exemple dans les figures 4 et 5, le dispositif d'encollage 13 peut être configuré pour encoller deux bandes longitudinales BL s'étendant parallèlement à la direction de déroulement D du film, de préférence sur les bords latéraux du film, et destinées à venir au contact de pans de parois latérales des barquettes s'étendant parallèlement à la direction de convoyage C. Le dispositif d'encollage 13 comprend alors deux têtes d'encollage 13b2 parallèles et orientées dans la direction de déroulement D de la bobine 12. Les bandes encollées du film peuvent être continues comme représenté sur la figure 5, ou discontinues.

Le dispositif d'encollage 13 peut également, en complément ou en alternative, être configuré pour encoller des bandes transversales BT s'étendant transversalement à la direction de déroulement D du film. Pour cela, le dispositif d'encollage peut comprendre une tête d'encollage 13b1 orientée perpendiculairement à la direction de déroulement D. Ces bandes transversales sont destinées à venir au contact de pans de parois latérales des barquettes s'étendant perpendiculairement à la direction de convoyage, ou à être rabattues contre des parois des barquettes s'étendant également perpendiculairement à la direction de convoyage.

Dans des modes de réalisation, le dispositif d'encollage 13 peut aussi être configuré pour encoller également des pans des barquettes destinés à venir en contact avec le film.

Ainsi, dans l'exemple représenté en figure 2, le dispositif d'encollage 13a est configuré pour encoller au moins deux pans de parois destinés à s'étendre dans un plan parallèle à la paroi de fond de la barquette de part et d'autre de l'ouverture.

Le dispositif d'encollage 13a peut être configuré pour encoller deux pans de parois situés de part et d'autre de l'ouverture de la barquette et s'étendant dans la direction de convoyage comme illustré par exemple sur la figure 3A. Sur la figure 3A, les parties encollées représentées en gris correspondent aux pans de parois P1, P2 de la barquette B1 se situant de part et d'autre de l'ouverture O.

Le dispositif d'encollage 13a peut être configuré pour encoller deux pans de parois situés de part et d'autre de la barquette et s'étendant dans une direction perpendiculaire à la direction de convoyage comme illustré par exemple sur la figure 3B par les parties grisées. Ici, les parties encollées comprennent des pans de parois formés par les extrémités des volets V1 et les pans de parois P3 et P4 de la barquette B2. On assure ainsi, par le collage du film transparent, la fixation des extrémités des volets V1 sur les pans de parois P3 et P4 en une seule opération.

Le dispositif d'encollage 13a peut également être configuré pour encoller les quatre pans de parois situés de part et d'autre de l'ouverture de la barquette comme illustré sur la figure 3C par exemple.

La chaine d'emballage comprend également un rouleau presseur 14 configuré pour placer le film transparent de manière à recouvrir l'ouverture de chaque barquette B et pour presser le film transparent contre les pans de parois encollés. On notera que le rouleau presseur doit exercer une pression prédéterminée suffisante de manière à pouvoir coller le film transparent biodégradable sur les pans de parois et que les pans de parois permettent d'assurer une certaine rigidité à la barquette. Les pans de parois permettent aussi d'avoir une surface de contact plus grande entre le film transparent et la barquette au niveau de la partie encollée ce qui garantit une meilleure adhérence du film transparent lorsque celui-ci est collé. De plus, lorsque le film transparent utilisé est d'une épaisseur assez faible, les pans de parois évitent que le film transparent ne se déchire lorsqu'il est pressé sur les pans de parois.

On notera que la traction sur le film transparent F est exercée lors du déplacement d'une barquette lorsque le film transparent a été collé lors de la mise en route de la chaine d'emballage sur une portion de la baquette, ici sur au moins un pan de paroi. La traction est alors transférée au reste du film transparent lorsque le rouleau presseur 14 appuie sur le film transparent F. Cependant, le déroulement de la bobine peut être asservi afin de faciliter l'emballage et de gagner en productivité.

On notera que dans l'exemple représenté sur la figure 2, la partie encollée correspond à au moins deux pans de parois se trouvant de part et d'autre de l'ouverture. Dans une variante de réalisation, le dispositif d'encollage 13a peut être remplacé par un dispositif d'encollage du film transparent 13b tel que décrit en référence aux figures 4 et 5. Dans ce cas, le dispositif d'encollage 13b est configuré pour encoller au moins deux bandes de film transparent destinées à venir en contact contre au moins deux pans de parois de part et d'autre de l'ouverture de la barquette. Ainsi, la colle peut être déposée directement sur le film transparent F avant que celui-ci n'arrive en contact avec la barquette. Un tel dispositif d'encollage ne peut être utilisé avec de la colle thermique qui aurait déjà refroidi avant d'être pressé contre la barquette. En revanche, un tel dispositif d'encollage est adapté pour l'encollage avec d'autres types de colles, par exemple des colles sensibles à la pression.

Ainsi, la distance entre des bandes transversales BT successives et la largeur des bandes BT est déterminée en fonction de la position des pans de parois situés de part et d'autre de l'ouverture selon la direction de convoyage, de la vitesse de convoyage et de l'espacement entre deux barquettes successives. La largeur des bandes longitudinales BL est choisie pour correspondre à la largeur et à la position des pans de parois situés de part et d'autre de l'ouverture selon une direction perpendiculaire à la direction de convoyage.

Le dispositif de découpe 15 est configuré pour couper le film transparent F selon une direction perpendiculaire à la direction de convoyage de manière à séparer deux barquettes consécutives dont l'ouverture de chacune est recouverte de film transparent collé sur la barquette. La découpe du film transparent biodégradable se fait alors que le convoyeur déplace les barquettes à une vitesse constante. Le dispositif de découpe doit donc être rapide par rapport à la vitesse de convoyage des barquettes pour éviter d'avoir à interrompre le convoyeur. Le procédé d'emballage peut donc fonctionner en continu jusqu'à l'étape de découpe du film transparent par le dispositif de découpe 15, ce qui permet d'augmenter les cadences de production de l'emballage.

Le dispositif de découpe 15 peut par exemple comporter un système mécanique, un faisceau laser ou un fil chaud aptes à faire fondre le film transparent biodégradable le long de la ligne de découpe, le faisceau laser ou le fil chaud pouvant par exemple être déplacés le long de la ligne de découpe à une vitesse supérieure à la vitesse de convoyage. En variante, le système mécanique et le faisceau laser peuvent être configurés pour découper le film transparent le long de la ligne de découpe ou le fil chaud peut être orienté le long de la ligne de découpe, auquel cas un déplacement du système mécanique, du faisceau laser ou du fil chaud le long de la ligne de découpe n'est pas nécessaire.

On notera que dans le mode de réalisation de la figure 2, les barquettes sont très proches les unes des autres de sorte que la distance entre deux barquettes consécutives est inférieure à une distance prédéterminée, par exemple de l'ordre de 30 à 40 mm, et de préférence la distance entre deux barquettes consécutives est nulle. Dans ce cas le dispositif de découpe 15 est configuré pour réaliser la découpe au droit de chaque barquette, c'est-à-dire que le film est découpé exactement aux dimensions de chaque barquette.

La figure 4 illustre une variante de la chaîne d'emballage 2 et du procédé d'emballage correspondant pouvant être mis en œuvre lorsque la distance entre deux barquettes consécutives est supérieure à la distance prédéterminée évoquée précédemment, et notamment lorsque la distance est non nulle.

La chaine d'emballage 2 comprend un convoyeur 11, un distributeur de film transparent biodégradable 12, un rouleau presseur 14 semblables à ceux décrits précédemment en référence à la figure 2. Dans le mode de réalisation décrit ici, la chaine d'emballage 2 peut comprendre un dispositif d'encollage 13b configuré pour encoller des bandes de film transparent destinées à former des zones d'adhésion du film transparent sur des parties prédéterminées de la barquette.

Le dispositif d'encollage 13b est configuré pour encoller des bandes BT du film transparent F s'étendant perpendiculairement à la direction de déroulement D du film transparent F. Le dispositif d'encollage 13b comporte alors une tête d'encollage 13b1 orientée perpendiculairement à la direction de déroulement D visible sur la figure 5. Les bandes BT sont destinées à venir en contact avec des bandes d'extrémité supérieures des parois latérales de la barquette orientées perpendiculairement à la direction de convoyage C. Ainsi, la distance entre des bandes BT successives et la largeur des bandes est déterminée en fonction de la longueur de la barquette dans la direction de convoyage, de la position des bandes d'extrémité supérieure sur les parois latérales transversales PT et de l'espacement entre deux barquettes successives.

Dans le mode de réalisation décrit ici, puisque les barquettes B sont éloignées les unes des autres, le film transparent F présente deux extrémités libres de part et d'autre de la ligne de découpe lorsqu'il a été coupé par un dispositif de découpe dans une direction perpendiculaire à la direction de convoyage.

Chacune de ces extrémités libres peut alors être rabattue vers une paroi latérale d'une barquette adjacente respective orientée perpendiculairement à la direction de convoyage. Dans ce cas, les bandes de film encollées par le dispositif d'encollage sont avantageusement continues de sorte que les extrémités du film rabattues vers les parois latérales de la barquette puissent adhérer sur ces dernières.

Dans le mode de réalisation décrit ici, la découpe du film transparent et le rabattage des extrémités du film transparent vers les parois latérales transversales de la barquette est réalisé par un système de découpe et de rabattage 16 comprenant un dispositif de découpe et un dispositif de rabattage comprenant des rouleaux comme illustré sur la figure ou des volets articulés orientables par exemple. Ainsi, après que le film ait été coupé le long de la ligne de découpe par le dispositif de découpe, les rouleaux sont déplacés le long des parois latérales transversales PT de deux barquettes consécutives pour rabattre chaque extrémité du film transparent encollée vers une paroi latérales transversale PT adjacente.

Dans une variante de réalisation, le rabattage des extrémités libres du film transparent vers les parois latérales transversales peut se faire avec un dispositif de rabattage indépendant du dispositif de découpe et placé plus loin dans la direction de convoyage sur la chaine d'emballage. Le dispositif de rabattage peut comprendre par exemple des volets mécaniques actionnables et configurés pour appuyer sur la partie supérieure de la barquette tout en ramenant l'extrémité du film vers la paroi transversale jusqu'au contact de celle-ci. Les volets rabattables sont également configurés pour exercer une pression sur le film F afin de permettre le collage du film F sur la bande d'extrémité supérieure de chaque paroi latérale transversale PT. Bien entendu, d'autres dispositifs de rabattage peuvent être envisagés. Le dispositif de rabattage peut notamment comprendre un dispositif permettant de faire pivoter la barquette avant de la placer sur un autre convoyeur linéaire. Les extrémités libres du film transparent peuvent alors être rabattues lorsque les barquettes se trouvent sur l'autre convoyeur à l'aide de rouleaux presseurs latéraux semblables à ceux décrits ultérieurement en référence à la figure 6.

Deux exemples de barquette pouvant être obtenus par ce procédé d'emballage sont illustrés dans les figures 3D et 3E, la partie encollée du film étant grisée. Dans la figure 3E, la largeur de la bande de film encollée est plus large que celle de la bande encollée de la figure 3D. Ainsi, deux pans de parois de part et d'autre de l'ouverture de la barquette B2 sont également recouverts de film transparent encollé. On notera que lors de la réalisation de l'emballage de la figure 3D, la pression exercée par le rouleau presseur 14 est moindre puisque le rouleau presseur 14 est uniquement utilisé pour placer le film transparent F sur la partie supérieure de la barquette B5 qui ne comporte pas de pans de parois.

Dans une variante de réalisation, et notamment dans le cas où les bandes encollées du film ne sont pas continues, la chaîne d'emballage peut être dépourvue de dispositif de rabattage. Dans ce cas, une fois le film découpé, des extrémités libres de film peuvent dépasser de quelques millimètres par rapport au contour de la barquette.

Dans une variante de réalisation, le dispositif d'encollage 13b peut être également configuré pour encoller deux bandes BL s'étendant dans la direction de déroulement D du film transparent F comme illustré sur la figure 5. Le dispositif d'encollage 13b comporte alors en outre deux têtes d'encollage 13b2 parallèles et orientées dans la direction de déroulement D de la bobine 12. Les deux bandes BL sont alors destinées à venir en contact avec les pans de paroi de la barquette B1s'étendant dans la direction de convoyage C comme illustré sur la figure 3F à titre d'exemple. Bien entendu, d'autres variantes sont possibles.

La figure 6 illustre une chaîne d'emballage 3 et un procédé d'emballage correspondant selon un troisième mode de réalisation.

La chaîne d'emballage 3 comprend un convoyeur 11, un distributeur de film transparent 12, un rouleau presseur 14 et un dispositif de découpe 15 semblables à ceux décrits précédemment.

On notera que, dans ce troisième mode de réalisation, la chaine d'emballage 3 peut comporter en outre un dispositif d'encollage du film transparent 13b comprenant deux têtes d'encollage 13b2 configurées pour encoller des bandes de film transparent destinées à venir en contact contre des bandes d'extrémité supérieure de chaque paroi de la barquette substantiellement parallèle à la direction de convoyage C, pour former des zones d'adhésion du film sur la barquette. Ici encore la largeur des bandes longitudinales BL est déterminée en fonction de la zone d'adhésion entre le film transparent et la barquette considérée, ici en fonction de la largeur de la barquette dans la direction perpendiculaire à la direction de convoyage et de la position des bandes d'extrémité supérieure des parois longitudinales BL. La chaîne d'emballage peut comprendre en outre un dispositif d'encollage longitudinal 13c configuré pour encoller lesdites bandes d'extrémité supérieure. Il s'agit ici de bandes d'extrémité supérieure des parois latérales longitudinales PL.

La chaine d'emballage 3 comporte en outre un dispositif de pressage 20 configuré pour rabattre deux bords du film transparent sur les parois latérales longitudinales BL de la barquette afin de permettre le collage du film transparent sur la partie encollée, ici les bandes d'extrémité supérieure des parois latérales longitudinales.

La figure 7A illustre le placement du film transparent F sur la barquette à l'aide du rouleau presseur 14. Les bords du film transparent visibles sur la figure 7B sont alors rabattus en direction des parois latérales longitudinales PL comme illustré sur la figure 7C. Ceux-ci sont rabattus par exemple à l'aide de deux rouleaux presseurs latéraux 20a, 20b du dispositif de pressage 20. Les rouleaux presseurs 20a, 20b sont configurés pour appuyer simultanément sur un pan de paroi et sur la paroi latérale longitudinale PL de la barquette afin de rabattre les deux extrémités du film transparent visibles sur la figure 7B en direction des parois latérales longitudinales PL et peuvent comprendre un évidement par exemple. On obtient alors la barquette avec les extrémités du film transparent collées sur la barquette comme visible sur la figure 7D.

On notera que dans ce mode de réalisation, la largeur du film transparent F enroulé sur la bobine 12 est supérieure à la largeur de la barquette et de manière plus générale supérieure à une dimension de la barquette selon une direction perpendiculaire à la direction de convoyage C.

Bien entendu, il est possible d'ajouter à cette chaine d'emballage d'autres dispositifs pour obtenir des emballages plus complexes tels que ceux décrits précédemment.

La présente divulgation ne se limite donc pas aux chaines d'emballages décrites en référence aux figures 2, 4 et 6 seulement à titre d'exemple, mais elle englobe toutes les variantes que pourra envisager l'homme de l'art dans le cadre de la protection recherchée. De même, les exemples de barquettes obtenues après mise en œuvre des procédés d'emballage décrits en référence aux figures 3A à 3F ne sont pas limitatif et bien d'autres variantes peuvent être envisagées en fonction des parties encollées sur le film transparent ou sur la barquette. Comme illustré dans la présente demande, les zones d'adhésion du film transparent sur la barquette au niveau des parties encollées peuvent se trouver sur le dessus de la barquette, c'est-à-dire sur les pans de parois et/ou sur les côtés, c'est-à-dire sur les parois latérales. On notera que les différents dispositifs d'encollage utilisés sont configurés pour encoller des parties du film transparent prédéterminées en fonction de la configuration d'emballage souhaité et de la chaine d'emballage utilisée.

On notera que l'utilisation d'un dispositif d'encollage du film transparent 13b est particulièrement avantageux puisqu'il permet de s'adapter très facilement à différents types de barquettes et à différentes configurations d'emballage souhaités avec ou sans rabattage du film transparent sur les parois latérales de la barquette.

De plus, le fait d'encoller uniquement le film transparent, et non les parois de la barquette, présente un avantage supplémentaire de supprimer tout risque de contamination des denrées contenues dans les barquettes par de la colle.

On notera également que dans l'exemple des figures 2, 4 et 6 décrites ici, les parois latérales longitudinales PL sont orientées de manière substantiellement parallèle à la direction de convoyage C. Dans une variante de réalisation, les parois latérales transversales PT peuvent être orientées de manière substantiellement parallèle à la direction de convoyage C.

On notera également que dans l'exemple des figures 2 et 6 décrites ici, les barquettes comprennent deux parois latérales transversales PT perpendiculaires aux parois latérales longitudinales PL. Bien entendu, d'autres types de barquettes peuvent être considérés avec, par exemple, une paire de parois latérales inclinée par rapport aux parois latérales transversales PT représentées dans les figures. Dans ce cas, le dispositif d'encollage 13a de la figure 2 peut être configuré pour encoller les deux pans de parois correspondants et le dispositif d'encollage du film transparent 13b, et plus particulièrement la tête d'encollage 13b1, peut être configuré pour encoller deux bandes de film transparent destinées à venir en contact avec ces pans de parois. Le dispositif de découpe 15 est alors configuré pour couper le film transparent dans la direction de la paire de parois latérales inclinée. On considère alors que la ligne de découpe est substantiellement perpendiculaire à la direction de convoyage C.

Par ailleurs, dans les exemples décrits ici, les barquettes sont réalisées en carton. Bien entendu, d'autres types de barquettes peuvent être utilisées, lorsqu'elles sont réalisées en un autre matériau biodégradable tel que la cellulose ou d'autres fibres végétales telles que le chanvre, le palmier, la canne à sucre, le bambou, etc... et peuvent comporter des pans de parois moulés et non rabattus. En outre, les barquettes peuvent être réalisées en un autre matériau recyclable comme un plastique mono-matériau.

On notera que selon la présente invention, le procédé et la chaine d'emballage associés permettent de fermer chaque barquette avec un film transparent sans engendrer aucun déchet industriel résiduel puisque tout le film transparent est utilisé lors de l'emballage. En effet, toute la largeur du film transparent est utilisée lors de la fermeture de la barquette et le film transparent est découpé, dans sa longueur, aux dimensions de l'emballage à réaliser.

## Revendications

1. Procédé d'emballage écologique de denrées périssables dans une barquette biodégradable ou recyclable permettant la visualisation des denrées à travers une ouverture de la barquette, comportant:
- une étape de fourniture d'une pluralité de barquettes (B) en matériau biodégradable ou recyclable, chaque barquette (B) formant une cavité destinée à contenir des denrées périssables, et comprenant une ouverture (O),
- une étape de convoyage de manière continue de la pluralité de barquettes (B) dans une direction de convoyage (C ), la pluralité de barquettes (B) étant placées consécutivement de manière à présenter une paire de parois latérales (PL) orientées de manière substantiellement parallèles à la direction de convoyage (C ),
- une étape de fermeture de l'ouverture (O) de chaque barquette par un film transparent biodégradable ou recyclable (F), l'étape de fermeture comprenant une pluralité de sous-étapes mises en œuvre lors du convoyage de manière continue, la pluralité de sous-étapes comportant :
* le déroulement, de manière continue, selon une direction de déroulement (D), d'une bobine (12a) comportant le film transparent (F),
* l'encollage d'au moins une partie du film transparent déroulé,
* le placement du film transparent (F) de manière à recouvrir l'ouverture (O),
* le pressage du film transparent sur la barquette au niveau de la partie encollée,
* la découpe du film transparent selon une direction sensiblement perpendiculaire à la direction de convoyage (C) de manière à séparer deux barquettes consécutives dont l'ouverture de chacune est recouverte du film transparent collé sur la barquette.

2. Procédé d'emballage selon la revendication précédente, dans lequel la barquette comporte au moins deux pans de parois situés de part et d'autre de l'ouverture (P1, P2) et destinés à s'étendre dans un plan parallèle à une paroi de fond de la barquette,et la partie encollée comprend deux bandes du film transparent destinées à venir en contact contre les deux pans de paroi (P1, P2) de la barquette (B1).

3. Procédé d'emballage selon l'une des revendications précédentes, dans lequel :
- la partie encollée comprend des bandes du film transparent (F) destinées à venir en contact contre lesdites bandes d'extrémité supérieure, et
- la sous-étape de pressage du film transparent (F) sur la barquette (B) au niveau de la partie encollée comprend le rabattage de deux bords du film transparent sur les parois latérales (PL) de la barquette orientées de manière substantiellement parallèles à la direction de convoyage (C).

4. Procédé d'emballage selon l'une des revendications précédentes, dans lequel la sous-étape de découpe du film transparent (F) comprend, lorsque la distance entre deux barquettes consécutives est supérieure à une distance prédéterminée :
- la coupe du film transparent sur une ligne de découpe selon une direction perpendiculaire à la direction de convoyage (C), laissant ainsi deux extrémités de film transparent libres de part et d'autre de la ligne de découpe, et
- le rabattage de chaque extrémité libre vers une paroi latérale (PL) d'une barquette adjacente respective orientée perpendiculairement à la direction de convoyage.

5. Procédé d'emballage selon la revendication précédente, dans lequel :
- chaque barquette (B) comprend deux parois latérales (PL) orientées perpendiculairement à la direction de convoyage (C), et
- la partie encollée comprend des bandes du film transparent (F) destinées à venir en contact contre des bandes d'extrémité supérieure des parois latérales (PL) orientées perpendiculairement à la direction de convoyage (C).

6. Chaine d'emballage (1, 2 ,3) configurée pour mettre en œuvre le procédé d'emballage selon l'une des revendications précédentes, comprenant :
- un convoyeur (11) configuré pour convoyer, de manière continue, une pluralité de barquettes en matériau biodégradable ou recyclable dans une direction de convoyage,
- un distributeur de film transparent biodégradable ou recyclable (12), configuré pour accueillir une bobine de film transparent biodégradable (12a) et pour dérouler de manière continue ladite bobine selon une direction de déroulement (D),
- un dispositif d'encollage (13a ; 13b ; 13c) configuré pour encoller une partie du film transparent (F) déroulé de la bobine,
- un rouleau presseur (14) configuré pour placer le film transparent de manière à recouvrir l'ouverture de chaque barquette,
- au moins un dispositif de pressage (14 ; 20) configuré pour presser le film transparent sur chaque barquette au niveau de la partie encollée,
- un dispositif de découpe (15 ; 16) configuré pour couper le film transparent (F) selon une direction sensiblement perpendiculaire à la direction de convoyage (C) de manière à séparer deux barquettes consécutives dont l'ouverture de chacune est recouverte de film transparent (F) collé sur la barquette (B).

7. Chaine d'emballage (1) selon la revendication précédente, dans laquelle :
- la barquette (B1) comporte au moins deux pans de parois (P1, P2) situés de part et d'autre de l'ouverture (O) et destinés à s'étendre perpendiculairement aux parois latérales (PL), et
- le dispositif d'encollage (13a ; 13b) est configuré pour encoller deux bandes du film transparent destinées à venir en contact contre les deux pans de paroi de la barquette.

8. Chaine d'emballage (3) selon l'une des revendications 6 à 7, dans laquelle :
- le dispositif d'encollage (13c) est configuré pour encoller des bandes du film transparent destinées à venir en contact contre des bandes d'extrémité supérieure des parois latérales substantiellement parallèles à la direction de convoyage de chaque barquette, et
- la chaine d'emballage (3) comprend un dispositif de pressage (20) configuré pour rabattre deux bords du film transparent sur les parois latérales de la barquette orientée de manière substantiellement parallèle à la direction de convoyage (BL).

9. Chaine d'emballage (2) selon l'une des revendications 6 à 8, dans laquelle, lorsque la distance entre deux barquettes consécutives est supérieure à une distance prédéterminée :
- le dispositif de découpe (16) est configuré pour couper le film transparent sur une ligne de découpe selon une direction perpendiculaire à la direction de convoyage, laissant ainsi deux extrémités de film transparent libres de part et d'autre de la ligne de découpe, et
- la chaine d'emballage (2) comprend en outre un dispositif de rabattage (16) configuré pour rabattre chaque extrémité libre vers une paroi latérale d'une barquette adjacente respective orientée perpendiculairement à la direction de convoyage.

10. Chaine d'emballage (2) selon la revendication précédente, dans laquelle :
- chaque barquette (B) comprend deux parois latérales orientées perpendiculairement à la direction de convoyage (BT), et
- le dispositif d'encollage (13b) est configuré pour encoller des bandes du film transparent destinées à venir en contact contre des bandes d'extrémité supérieure des parois latérales orientées perpendiculairement à la direction de convoyage (BT).

11. Chaine d'emballage selon l'une des revendications 6 à 10, dans laquelle le dispositif d'encollage est configuré pour encoller des bandes de film transparent destinées à être mises en contact contre des parties prédéterminées de la barquette.
